Europäisches Patentamt

European Patent Office

Office européen des brevets

(19)

(11) EP 1 445 942 A1

(12) EUROPEAN PATENT APPLICATION
published in accordance with Art. 158(3) EPC

(43) Date of publication:
11.08.2004 Bulletin 2004/33

(51) Int Cl.⁷: H04N 1/60, H04N 1/46,
G06T 1/00, G06T 5/00

(21) Application number: 02803106.0

(22) Date of filing: 11.11.2002

(86) International application number:
PCT/JP2002/011736

(87) International publication number:
WO 2003/043307 (22.05.2003 Gazette 2003/21)

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 15.11.2001 JP 2001350523

(71) Applicant: Sony Corporation
Tokyo 141-0001 (JP)

(72) Inventors:
• ISHIGAMI, Koichiro, c/o SONY CORPORATION
Shinagawa-ku, Tokyo 141-0001 (JP)
• KATOH, Naoya, c/o SONY CORPORATION
Shinagawa-ku, Tokyo 141-0001 (JP)

(74) Representative: Müller - Hoffmann & Partner
Patentanwälte,
Innere Wiener Strasse 17
81667 München (DE)

(54) **IMAGE INFORMATION TRANSMISSION METHOD AND IMAGE INFORMATION PROCESSING APPARATUS**

(57) The present invention provides an image signal processor for providing a color image. In this apparatus, an image file reader (51) reads an image data file having appended thereto information indicative of how the color and gradation representation of image data encoded in the standard color space has been adjusted as information for reproducing color and gradation information on the image data. Image data in an appropriate image block and an appropriate correction method are selected by a judgment unit (52), and the image data is corrected by a correction unit (53). The result of correction is provisionally held in a memory (RAM). Image data after corrected is processed by an on-monitor display processing unit (55) for display on a monitor. Also, the image data after corrected is processed by a print-out processing unit (56) for supply to, and print-out by, a printer driver.

FIG.7

EP 1 445 942 A1

**Description**

Technical Field

The present invention relates to an image information processing method and apparatus.

This application claims the priority of the Japanese Patent Application No. 2001-350523 filed on November 15, 2001, the entirety of which is incorporated by reference herein.

Background Art

In a system including processes from production of image data up to display and output of the image data as visual information (will be referred to as "color reproduction system" hereunder), signals representing a color and gradation are processed. Except for a system of this type completed in one apparatus, the color reproduction system is divided in a plurality of dispersed processes. Therefore, for final color and gradation reproduction in a desired state, interfaces of all the dispersed processes should interpret a signal expression by a common measure. On this account, coding and handling of various signals are standardized by the academia and industry. Especially, the color space specifications are defined in CIE 1931 (standard colorimetric system) by the CIE (International Commission on Illumination), which defines the color matching functions for the standard observers. Various color spaces and their coding, premised on colorimetric numerical standards, have also been standardized on the basis of the CIE 1931.

Signal transmission according to these standards will lead to a color matching by which color can colorimetrically be reproduced, but all kinds of color cannot be reproduced accurately depending upon the characteristic of input and output devices used and limitation of coding. On this account, it has been proposed to use a color reproduction technique such as the color gamut compression for mapping a color, not reproducible by a certain output device, as a similar color included in a color gamut of the original color, and adjusting the color included in the color gamut correspondingly, to thereby match the reproduced color in appearance with the original one and correct it for reproduction of a color appearing more similar to the original one.

For example, a color included in the sRGB space as defined in IEC 61966-2.1 can be reproduced to be acceptably similar to an intended one when it is supplied directly to a personal computer's monitor. Thus, the sRGB space has been prevalent as a de facto standard for its easiness to use. Also, in DCF Version 1.0 (JEIDA-49-2-1998) adopted by many manufacturers as the image file standard for digital still cameras, it is defined to record image data in color included in the sRGB space. However, since the sRGB space is to be applied primarily to the gamma characteristic and color gamut of an ordinary personal computer's monitor, any color out of the sRGB color gamut should not be generated as far as possible for rending an image for display on the monitor. Normally, an image captured by a digital still camera undergoes a process of image rendering before storage in YCC (brightness and chromaticity separation space) in many cases. The concept of color gamut is not applied to this image processing, and a color out of the sRGB color gamut (YCC) develops in the image producing process. On the other hand, the color gamut adopted in color printer of various types is different from the sRGB color gamut of the computer's monitor. Generally, the color gamut applied to the color printer is larger in a darker area but smaller in a brighter area than that applied to the computer's monitor. Therefore, an image should be rendered for print-out by a color printer with consideration given to a color gamut of the color printer output. In such an application of a digital still camera, an increased number of different types of outputs will disorder the gradation in some areas of the color gamut if an image rendered for output by a certain device is displayed or printed out by a device of another type.

Also when a virtual scene is three-dimensionally represented by computer graphics using no input device, image data is generated by rendering with a value proportional to a physical light intensity of the scene. In many cases, however, results of color and gradation adjustments made correspondingly to an intended on-monitor display are recorded as image data after being encoded in an RGB space depending upon the display device. In many cases, however, the image data adjusted in color and gradation according to the intended on-monitor display is encoded, for recording, in an RGB space depending upon a display device used. Thus, in correction of the image data to make the most of the color gamut and gradation characteristics in another display device such as a digital cineprojector, it is difficult to reproduce an original representation from the data once encoded.

In the above circumstances, there are newly being standardized a color space covering the human-perceptible range of vision and ranges of representation by various types of output devices by expanding the representable color gamut and bit depth while maintaining the easiness of handling signals encoded by the standard monitor characteristic and observing environment defined by the sRGB space, a color space in which signals more faithful to a scene can be recorded by imparting, to the signals, a gradation corresponding in a one-to-one relation to the physical light intensity, etc. These color gamut techniques include an expansion of the sRGB space (IEC 61966-2.1 Annex G/Annex F, for example) etc. advantageous to the coding by an "output-ready" representation.

Disclosure of the Invention

Accordingly, the present invention has an object to overcome the above-mentioned drawbacks of the related art by providing a novel and improved image signal processing method and apparatus for outputting a color image.

The present invention has another object to provide an image signal processing method and apparatus, capable of representing an image in a desired color by making the most of the standard color space having a color gamut thereof expanded.

The present invention has still another object to provide an image signal processing method and apparatus, capable of an appropriate image rendering when an output device and intended purpose are known.

The present invention has yet another object to provide an image signal processing method and apparatus, capable of providing the best image data correction efficiently.

The present invention has still yet another object to provide an image signal processing method and apparatus, capable of making an appropriate output only by selecting data most suitable for an apparatus intended to be used and an intended use of an image, without having to newly adjust the data, in case there is stored a plurality of image data rendered for display on devices of different types.

According to the present invention, images rendered for various output devices are stored simultaneously in a scene-referred space, and rendered at each output device.

Further, the present invention will be more effective by building a system incorporating the conventional techniques and taking in consideration the following:

With image data prepared in an appropriate format and color space and a specific recording medium having the image data stored therein, the user will be able to obtain a desirable result of color reproduction by designating an appropriate adjustment in handling the image data and recording medium in a range in which he can know the state of the image data. Heretofore, image data encoded in a specific format and color space is limited in state and application in most cases. In some of such cases, a desirable color representation can result from an adjustment made by a correction module for the image input/output device and application software, that can automatically make a judgment with some assumption of such a limitation. In a future information environment called "broadband", since various contents, sources from various input devices, outputs to various output devices and various applications of the outputs are possible even for one device or application software, it will be difficult to make an optimum adjustment with a judgement based on a single assumption. As having previously been described, a format in which a multi-purpose expanded color space or a plurality of such color spaces can be selected (JPEG 2000 "1TU-T Rec. T. 801", for example) is under standardization, and even data in a specific image format and color space will contain together intentions of representation expected by the user, content preparer and device. It is difficult to judge to what extent and for what purpose image data itself included in the data has been corrected in the process of transmission. Therefore, since there are many respects to be taken in consideration for a correct user's data handling and a desired color representation, the user cannot easily manage the color representation or a data correction by an automatically running hardware or software will possibly be applied excessively and repeatedly to a plurality of processes. To provide a desired color representation by making the most of a new standard color space in such a situation, it is necessary to ascertain the state appropriately and make an appropriate adjustment for an intended purpose.

Color and gradation of an image can be corrected in more than one manner. Generally, the correction is done based on any of the following information:

Content-expressed obj ects:
Person, scenery, really existent object, abstract object, etc.
Content preparing environments:
Electrophotography, three-dimensional computer graphic (CG), two-dimensional illustration, etc.
Coding characteristics:
Representable color gamut, gradation curve, bit depth, etc.
Input device characteristics:
Noise, dynamic range, spectral responsivity, light source, etc.
Output device characteristics:
Representable color gamut, gradation curve, etc.
Intentions of output application:
"beautiful", "true to really existent object", "true to result of image preparation", etc.

Of the above information, the input or output device characteristic is not necessary as a basis for correction of the color and gradation of image data encoded in a color space not dependent upon any device such as CIEXYZ, CIELAB or the like or in a space that represents appearance of colors such as CIECAM 97s. Image data encoded in a color space dependent upon a device can be corrected in color and gradation referring to a device profile standardized by ICC (International Color Consortium) or has only to be specially defined in the specification of coding such as the sRGB color space. An intention of output application, for which image data is to be corrected in color and gradation, should be judged and acquired by an adjusting module itself. For correcting image data in color and gradation on the basis of information such as a content-expressed object or content preparing environment, some image formats have already been standardized, including an image format that can be recorded in a header block or the like via encoding. Therefore, such image data should preferably be corrected in color and gradation on the basis of the image format. A coding characteristic as the basis for correction in color and gradation of image data can be determined based on the specification of the image data format. Many of image data already encoded have also been adjusted in some way. The state of the image data should be clear, that is, it should be definite whether the data has been adjusted and for what object the adjustment has been done. Also, when image data adjusted to another state is used for the same content, it will possibly be unclear whether such data is actually existent or what the data refers to. These impossibilities are yet to solve for making the most of image data.

The above object can be attained by providing an image information transmission method including, according to the present invention, the steps of appending, in the form of a specific code to image data, information indicating how the image data encoded in the standard color space has been adjusted in color and gradation representation as information for reproducing color and gradation information on the image data; and transmitting the image data having the information appended as the specific code thereto.

In the above image information transmission method according to the present invention, information explaining how the image data is to be represented in color and gradation may be appended as the specific code to the image data.

Also in the above image information transmission method according to the present invention, parameters indicative of how the color and gradation representation of the image data has been adjusted may be appended as the specific coce to the image data.

Also in the above image information transmission method according to the present invention, the image data encoded in the standard color space, and a data file having appended thereto a code indicative of how the color and gradation have been adjusted, may have appended thereto, respectively, position information enabling reference to another data file adjusted in color and gradation differently from the same color and gradation representation.

Also in the above image information transmission method according to the present invention, there may be stored in one data file a plurality of image data adjusted in color and gradation differently from the same color and gradation representation and a specific code indicative of how each of the image data has been adjusted in color and gradation representation.

Also, the above object can be attained by providing an image information transmission method in which when there exists a plurality of data files each having stored therein image data encoded in the standard color space and adjusted in color and gradation differently from the same color and gradation representation, a management data file is used which has stored therein position information enabling reference to an image data file corresponding to the adjusted state of each of the data files.

In the above image information transmission method according to the present invention, information explaining how image data is to be represented in color and gradation may be appended as a specific code to the management data file.

Also, the above object can be attained by providing an image information processing apparatus that is supplied with image data having appended in the form of a specific code thereto information indicating how the image data encoded in the standard color space has been adjusted in color and gradation representation as information for reproducing color and gradation information on the image data, the apparatus including, according to the present invention, an adjusting means for reproducing color and gradation information on the image data by adjusting the image data referring to the information appended as the specific code to the image data.

In the above image information processing apparatus according to the present invention, there may be supplied image data having appended as the specific code thereto information explaining how the image data is to be represented in color and gradation, and the image data may be adjusted by the adjusting means on the basis of the information appended as the specific code to the image data and explaining how the image data is to be represented in color and gradation.

In the above image information processing apparatus according to the present invention, there may be supplied image data having appended as the specific code thereto parameters indicative of how the color and gradation representation of the image data has been adjusted, and the image data may be adjusted on the basis of the basis of the parameters appended as the specific code to the image data and indicating how the color and gradation representation of the image data has been adjusted.

In the above image information processing apparatus according to the present invention, the image data may be adjusted, for restoration to a before-adjustment state, by the adjusting means on the basis of the parameters indicative of how the color and gradation representation of the image data has been adjusted.

In the above image information processing apparatus according to the present invention, there may be supplied image data including the image data encoded in the standard color space, and a data file having appended thereto a code indicative of how the color and gradation have been adjusted, having appended thereto, respectively, position information enabling reference to another data file adjusted in color and gradation differently from the same color and gradation representation, and the image data may be adjusted by the adjusting means referring to the data file on the basis of the position information appended thereto.

In the above image information processing apparatus according to the present invention, an adjustment may be done by the adjusting means to reproduce an image in a color and gradation corresponding to an application on the basis of information indicative of an intended application of the image.

In the above image information processing apparatus according to the present invention, the image data may be adjusted, for restoration to a before-adjustment state, by the adjusting means on the basis of the parameters indicative of how the color and gradation representation of the image data has been adjusted.

In the above image information processing apparatus according to the present invention, an adjustment may be done by the adjusting means to reproduce an image in a color and gradation corresponding to an application on the basis of information indicative of an intended application of the image.

In the above image information processing apparatus according to the present invention, there may be supplied one data file having stored therein a plurality of image data having been adjusted in color and gradation differently from the same color and gradation representation and a code indicating how each of the image data has been adjusted, and the image data may be identified in the data file and adjusted by the adjusting means.

In the above image information processing apparatus according to the present invention, an adjustment may be done by the adjusting means to reproduce an image in a color and gradation corresponding to an application on the basis of information indicative of an application of the image.

In the above image information processing apparatus according to the present invention, the image data may be adjusted, for restoration to a before-adjustment state, by the adjusting means on the basis of the parameters indicative of how the color and gradation representation of the image data has been adjusted.

In the above image information processing apparatus according to the present invention, an adjustment may be done by the adjusting means to reproduce an image in a color and gradation corresponding to an application on the basis of information indicative of an application of the image.

Also, the above object can be attained by providing an image information processing apparatus in which when there exists a plurality of data files each having stored therein image data encoded in the standard color space and adjusted in color and gradation differently from the same color and gradation representation, there is supplied a management data file having stored therein position information enabling reference to an image data file corresponding to the adjusted state of each the data files, the apparatus including, according to the present invention, an adjusting means for reproducing the color and gradation representation of the image data by adjusting the image data referring to the image data file on the basis of the position information stored in the management data file.

In the above image information processing apparatus according to the present invention, the image data may be adjusted, for restoration to a before-adjustment state, by the adjusting means on the basis of the parameters indicative of how the color and gradation representation of the image data has been adjusted.

In the above image information processing apparatus according to the present invention, the image data may be adjusted on the basis of information appended as a specific code to the management data file and explaining how the image data is to be adjusted in color and gradation.

In the above image information processing apparatus according to the present invention, an adjustment may be done by the adjusting means to reproduce an image in a color and gradation corresponding to an application on the basis of information indicative of an application of the image.

These objects and other objects, features and advantages of the present invention will become more apparent from the following detailed description of the best mode for carrying out the present invention when taken in conjunction with the accompanying drawings.

Brief Description of the Drawings

FIG. 1 schematically illustrates a file format in which image data is recorded to a file according to the present invention.

FIG. 2 is a block diagram of the image processor according to the present invention.

FIG. 3 shows a flow of operations made to correct the color and gradation of image data according to the present invention for supply of the image data to a monitor.

FIG. 4 also shows a flow of operations made to correct the color and gradation of image data according to the present invention for supply to a color printer.

FIG. 5 schematically illustrates an example of color gamut conversion into an LCH color space for correcting the color and gradation of image data.

FIG. 6 schematically illustrates an example of chroma conversion in correcting the color and gradation of image data.

FIG. 7 shows, in the form of a block diagram, an example of the hardware configuration of the image processor according to the present invention.

Best Mode for Carrying Out the Invention

The present invention will be described in detail below concerning the embodiments thereof with reference to the accompanying drawings.

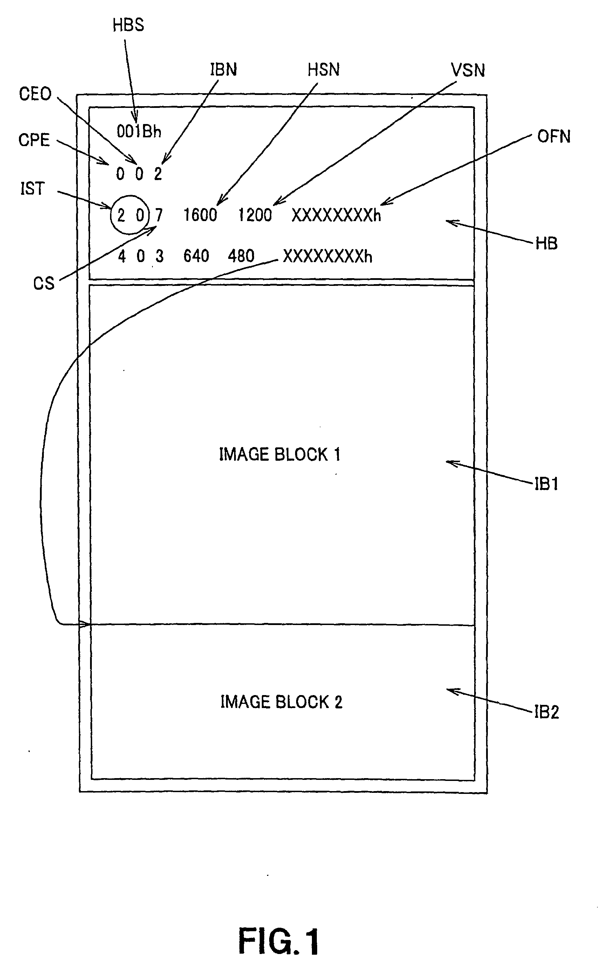

According to the present invention, image data is recorded to a file using a file format shown in FIG.1 for example.

Namely, the file format includes one header block HB and two or more image blocks IB1, IB2, ... as shown in FIG. 1.

To the header block HB, there are recorded a header block size HBS, content preparing environment CPE, content-expressed object CEO, number of image blocks IBN, image state IST, number of horizontal pixels HSN, number of vertical pixels VSN, color space SC and offset address OFA.

More specifically, the header block HB has recorded thereto one of codes (Code 0 to Code 6) CPE indicating content preparing environments listed in Table 1, and one of codes (Code 0 to Code 7) CEO indicating content-expressed objects listed in Table 2.

Table 1

| Code | Content Preparing Environments |
|---|---|
| 0 | Real scene is taken by digital camera |
| 1 | Printed matter is read by scanner |
| 2 | Film is read by scanner |
| 3 | Virtual scene is generated as two-dimensional illustration by computer graphics |
| 4 | Virtual scene is generated by three-dimensional rendering in computer graphics |
| 5 | Image data is edited by specific output device to be reproducible in desired color |
| 6 | Others |

Table 2

| Code | Content-expressed Objects |
|---|---|
| 0 | Person |
| 1 | Scene (day) |
| 2 | Scene (evening) |
| 3 | Scene (night) |
| 4 | Really existent object |
| 5 | Virtual object |
| 6 | Abstract symbol (graph etc.) |
| 7 | Others |

For each of the image blocks, there are recorded one of codes indicative of the adjusted states of image data listed in Table 3 and one of codes (Code 0 to Code 12) CS indicative of color spaces, one of vertical and horizontal pixels HSN and VSN and an offset address of an image block top OFA listed in Table 4.

Table 3

| Scene-referred States: | | |
|---|---|---|
| State Code | | State |
| Main | Sub | |
| 0 | 0 | Absolute colorimetric value representing physical light-distribution state of scene |
| 1 | 0 | Value of signal captured by image sensor and adjusted by at least noise cutting |
| 2 | 0 | Value adjusted by white balancing, linear matrix conversion into specific sensor space |
| 3 | 0 | Value intentionally adjusted within visual color gamut independently of specific device |
| Output-ready States: | | |
| State Code | | Device Set as Target at Time of Adjustment |
| Main | Sub | |
| 4 | 0 | Monitors for personal computer |
| 4 | 1 | CRT monitor for personal computer |
| 4 | 2 | Liquid crystal monitor for personal computer |
| 5 | 0 | TV monitors |
| 5 | 1 | Broadcasting TV monitor |
| 5 | 2 | Consumer CRT TV monitor |
| 5 | 3 | Consumer liquid crystal TV monitor |
| 5 | 4 | Consumer plasma TV monitor |
| 6 | 0 | Color printers |
| 6 | 1 | Ink-jet color printer |
| 6 | 2 | Sublimation thermal-transfer printer |
| 6 | 3 | Fusion thermal-transfer silver-salt color printer |
| 6 | 4 | Laser printer |
| 7 | 0 | Screen projectors |
| 7 | 1 | Business-use color projector |
| 7 | 2 | Theatrical digital projector |

Table 4

| Code | Color Space |
|---|---|
| 0 | CIEXYZ (16-bit) |
| 1 | CIELAB (16-bit) |
| 2 | CIELAB (8-bit) |
| 3 | sRGB (8-bit) as defined by IEC 61966-2.1 |
| 4 | sRGB (10-bit) as defined by IEC 61966-2.1 Annex F |
| 5 | sYCC (8-bit) as defined by IEC 61966-2.1 Annex G |
| 6 | sYCC (10-bit) as defined by IEC 61966-2.1Annex F |
| 7 | scRGB (16-bit) as defined by IEC 61966-2.2 |
| 8 | scRGB (12-bit) as defined by IEC 61966-2.2 |

Table 4   (continued)

| Code | Color Space |
|------|-------------|
| 9 | scYCC (12-bit) as defined by IEC 61966-2.2 Annex B |
| 10 | e-sRGB (10-bit) as defined by PIMA 7667 |
| 11 | e-sRGB (12-bit) as defined by PIMA 7667 |
| 12 | e-sRGB (16-bit) as defined by PIMA 7667 |
|  |  |

The Main Codes 0 to 3 of two types of codes indicative of adjusted states as image states IST in Table 3 indicate scene-referred states, respectively. Namely, image data is encoded by a value linearly proportional to a light physical state or by a value converted by a specific reversible function corresponding in one-to-one relation to the light physical state value. On the other hand, the Codes 4 to 7 indicate output-ready states. Namely, image data is encoded by a value adjusted correspondingly to the reproduction characteristic of a specific device.

Each of the image blocks IB1, IB2, ... has recorded therein image data encoded in a specific color space in the form of RAW point-by-point ordered from upper left to lower right.

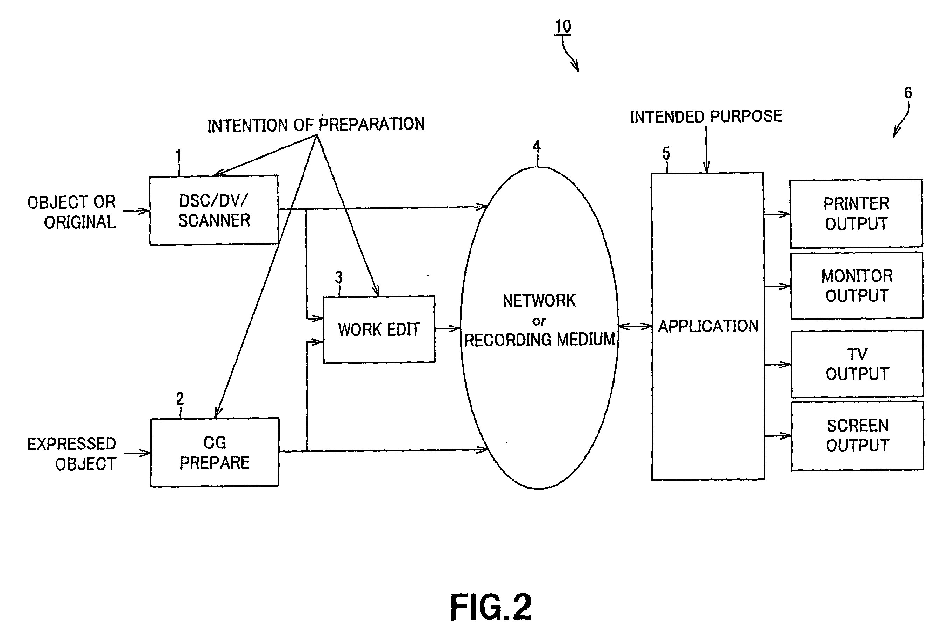

An image processing system, generally indicated with a reference number 10 in FIG. 2, will be described in which many steps of operation are done from preparation up to output or display of image data. In this image processing system 10, an application 5 is supplied with image data of an object, original or the like supplied from an imager reader 1 such as a digital still camera, video camera, image scanner or the like, CG image data on an expressed object, generated by a CG generator 2, image data edited by an image editor 3 from the image data or CG image data, or the like via a data transmission system 4, and one of various types of outputs including a printer output, monitor output, TV output, screen output and the like is produced by an output device 6 from the application 5.

In any parts of this image processing system 10, it is highly possible that an adjustment is done for some purpose. An example of the adjustment to be done at the application 5 using the file format shown in FIG. 1 will be explained herebelow.

The application 5 shown in FIG. 2 is a module included in the image processor and which appropriately corrects image data in the file format shown in FIG. 1 on the basis of information on a user's intention and output or device, that are already known, and information in the format file. It is assumed here that the application 5 is a software that can run in a personal computer.

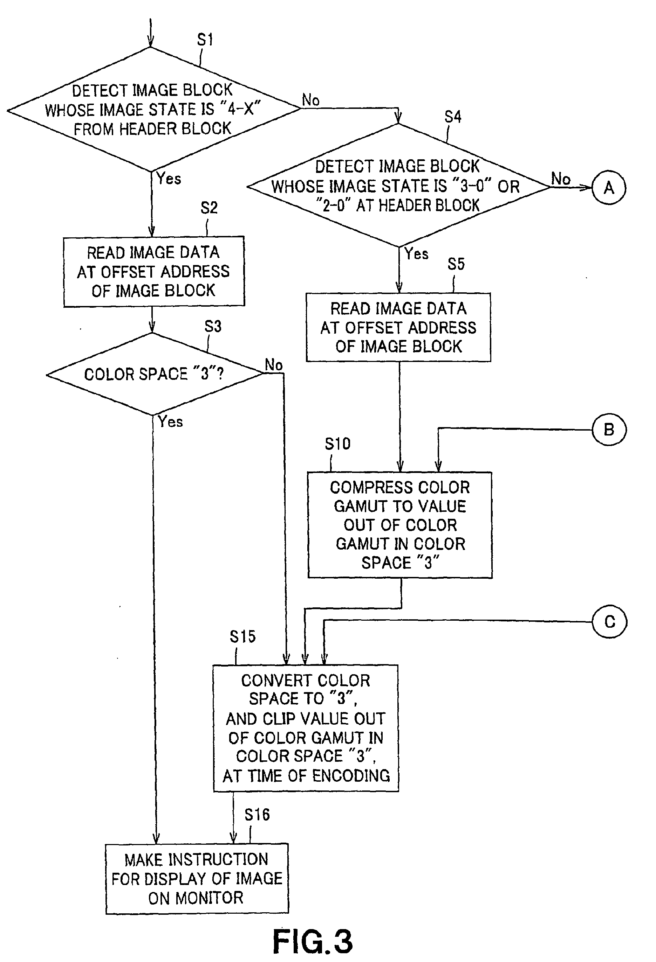

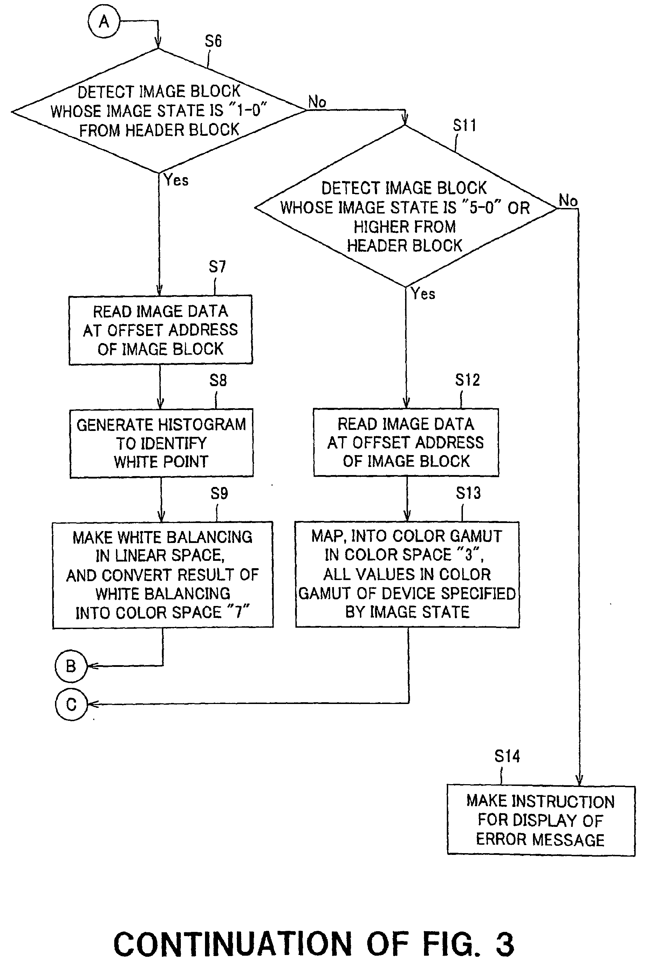

Determining that the user has opened the format file and finding a user's instruction for display of the image data on a monitor screen, the application software 5 runs to appropriately correct the color and gradation of the image data following a procedure shown in the flowchart in FIG. 3.

The correction in color and gradation of the image data for display on the monitor will be explained below with reference to FIG. 3. In step S1, the application software 5 judges whether an image block whose image state IST is "4-x" has been detected in the header block HB. It should be noted here that the image state IST "4-x" indicates that a device for which an adjustment is to be done is a personal computer monitor as will be known from Table 3.

In case the result of judgment in step S1 is affirmative (YES), namely, when an image block whose image state IST is "4-x" has been detected, the application software 5 goes to step S2. On the contrary, if the result of judgment in step S1 is negative (NO), the application software 5 goes to step S4.

In step S2, the application software 5 reads the image data from the offset address OFA at the top of the image block.

In step S3, the application software 5 judges, based on the header block HB, whether the color space code CS is "3". It should be noted here that the color space code CS "3" indicates an sRGB "8-bit" defined in IEC 61966-2.1 in Table 4.

In case the result of judgment in step S3 is affirmative (YES), namely, when the color space code CS is "3", the application software 5 goes to step S16. On the contrary, if the result of judgment in step S3 is negative (NO), the application software 5 goes to step S15.

In step S4, the application software 5 judges whether an image block whose image state IST is "3-0" or "2-0" has been detected in the header block HB. It should be noted here that in Table 3, the image state IST "3-0" indicates a value intentionally adjusted in the visual color gamut independently of a specific device and the image state IST "2-0" indicates a value already adjusted by white balancing, linear matrix conversion into a specific sensor space or the like.

In case the result of judgment in step S4 is affirmative (YES), that is, when the image data whose image state IST is "3-0" or "2-0" has been detected, the application software 5 goes to step S5. On the contrary, if the result of judgment in step S4 is negative (NO), the application software 5 goes to step S6.

In step S5, the application software 5 reads image data from the offset address OFA at the top of the image block, and then goes to step S10.

In step S6, the application software 5 judges whether an image block whose image state IST is "1-0" has been detected in the header block HB. It should be noted here that in Table 3, the image state IST "1-0" indicates a signal captured by an image sensor and having a value that might be processed by at least noise cutting.

In case the result of judgment in step S6 is affirmative (YES), namely, when the image block whose image state IST is "1-0" has been detected, the application software 5 goes to step S7. On the contrary, if the result of judgment in step S6 is negative (NO), the application software 5 goes to step S11.

In step S7, the application software 5 reads the image data from the offset address at the top of the image block.

In step S8, the application software 5 generates a histogram to identify a white point.

Next in step S9, the application software 5 makes white balancing in the linear space and converts the result of white balancing into an scRGB (16-bit) space defined by IEC 61966-2.2. It should be noted that this color space is expressed by a code CS "7" shown in Table 3.

In step S10, the application software 5 compresses the color gamut to outside the color gamut in a color space represented by a code CS "3" indicative of that color space, and then goes to step S15.

In step S11, the application software 5 judges whether an image block whose image state IST is "5-0" or higher shown in Table 3 has been detected in the header block HB.

In case the result of judgment in step S11 is affirmative (YES), namely, when the image block whose image state IST is "5-0" has been detected in the header block HB, the application software 5 goes to step S12. On the contrary, if the result of judgment in step S11 is negative (NO), the application software 5 goes to step S14.

In step S12, the application software 5 reads the image data at the offset address OFA at the top of the image block.

In step S13, the application software 5 maps all the values in the color gamut of a device specified by the image state IST in the color gamut in sRGB (8-bit) space defined by IEC 61966-2.1 and corresponding to the code CS "3" indicative of the color space, and then goes to step S15.

In step S14, the application software 5 provides an instruction for display of an error message.

Further in step S15, the application software 5 converts the color space into sRGB (8-bit) having the code CS "3" indicative of the color space, and clips a value out of the color gamut in this sRGB (8-bit) space at the time of encoding.

In step S16, the application software 5 provides an instruction for display of the image on the monitor.

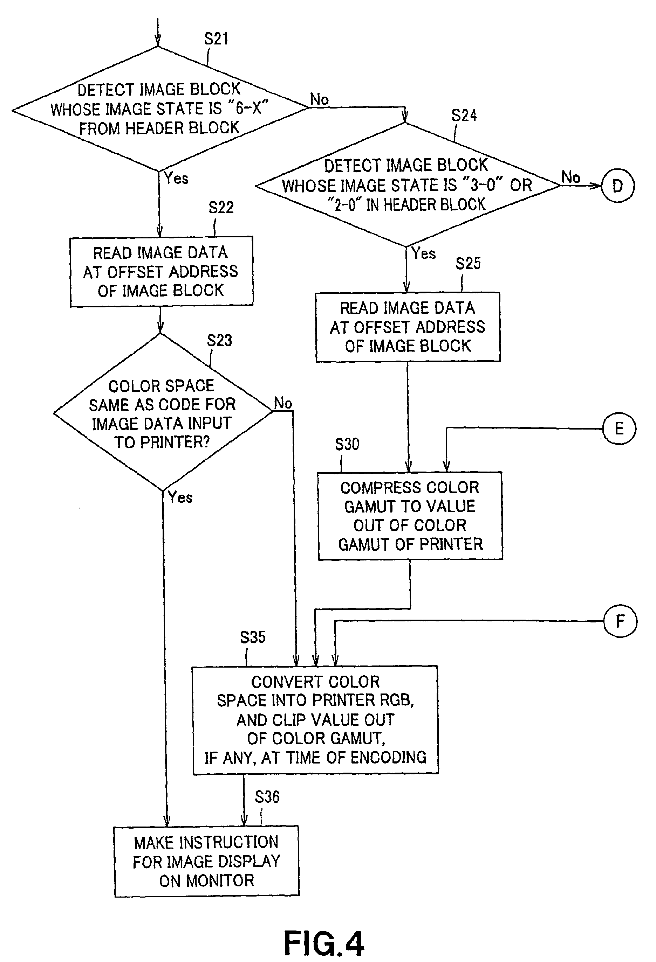

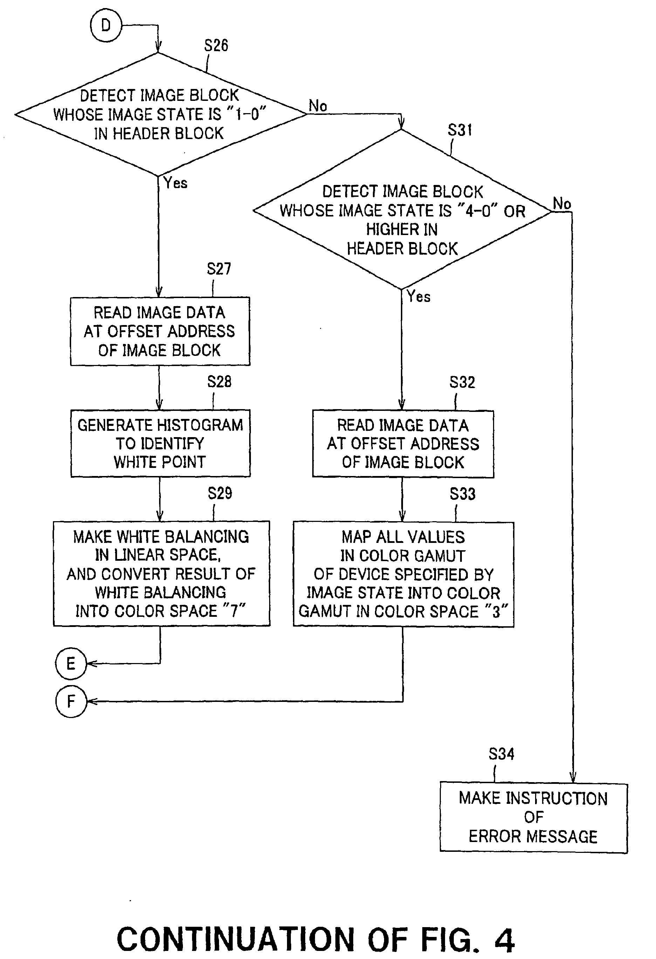

Determining that the user has made an instruction for output of a video content in a file being displayed on the monitor screen to a color printer for viewing, the application software 5 automatically runs to appropriately correct the color and gradation of the image following a procedure shown in the flow chart in FIG. 4.

The correction in color and gradation of the image data for print-out by the color printer will be explained below with reference to FIG. 4. In step S21, the application software 5 judges whether an image block whose image state IST is "6-x" has been detected in the header block HB. It should be noted here that the image state IST "6-x" indicates output of the image data to various types of color printers as will be known from Table 3.

In case the result of judgment in step S21 is affirmative (YES), namely, when an image block whose image state IST is "6-x" has been detected, the application software 5 goes to step S22. On the contrary, if the result of judgment in step S21 is negative (NO), the application software 5 goes to step S24.

In step S22, the application software 5 reads the image data at the offset address OFA at the top of the image block.

Next in step S23, the application software 5 judges whether the color space is the same as a code for input of image data to a printer.

In case the result of judgment in step S23 is affirmative (YES), that is, when the color space is the same as the code for supply to the printer, the application software 5 goes to step S36. On the contrary, if the result of judgment in step S23 is negative (NO), the application software 5 goes to step S35.

In step S24, the application software 5 judges whether an image block whose image state IST is "3-0" or "2-0" has been detected in the header block HB. It should be noted here that the image state IST "3-0" indicates a value intentionally adjusted in the visual color gamut independently of a specific device and the image state IST "2-0" indicates a value already adjusted by white balancing, linear matrix conversion into a specific sensor space or the like.

In case the result of judgment in step S24 is affirmative (YES), namely, when the image block whose image state IST is "3-0" or "2-0" has been detected, the application software 5 goes to step S25. On the contrary, if the result of judgment in step S24 is negative (NO), the application software 5 goes to step S26.

In step S25, the application software 5 reads the image data at the offset address OFA at the top of the image block.

In step S26, the application software 5 judges whether an image block whose image state IST is "1-0" has been detected in the header block HB. It should be noted here that the image state IST "1-0" indicates a signal captured by the image sensor and having a value adjusted by at least noise cutting.

In case the result of judgment in step S26 is affirmative (YES), that is, when the image block whose image state IST is "1-0" has been detected, the application software 5 goes to step S27. On the contrary, if the result of judgment in step S26 is negative (NO), the application software 5 goes to step S31.

In step S27, the application software 5 reads the image data at the offset address OFA at the top of the image block.

Next in step S28, the application software 5 generates a histogram to identify a white point.

In step S29, the application software 5 makes white balancing in the linear space, and converts the result of white balancing into an scRGB (16-bit) space defined by IEC 61966-2.2. It should be noted that this color space is represented by a code CS "7" indicative of a color space shown in Table 3.

In step S30, the application software 5 compresses the color gamut to a value out of a color gamut of the printer and then goes to step S35.

In step S31, the application software 5 judges whether an image block whose image state IST is "4-0" or higher has been detected from the head block HB.

In case the result of judgment in step S31 is affirmative (YES), that is, when the image block whose image state IST is "4-0" or higher has been detected, the application software 5 goes to step S32. On the contrary, if the result of judgment in step S31 is negative (NO), the application software 5 goes to step S34.

In step S32, the application software 5 reads the image data at the offset address OFA at the top of the image block.

Next in step S33, the application software 5 maps all values in the color gamut of a device specified by the image state IST into the color gamut of the printer, and goes to step S35.

In step S34, the application software 5 makes an instruction for display of an error message.

Next in step S35, the application software 5 converts the color space into a printer RGB, and clips a value out of the color gamut, if any, at the time of encoding.

In step S36, the application software 5 makes an instruction of output of the image data to the printer.

Note here that the color gamut compression in steps S10 and S30 uses a color gamut compression technique disclosed in the Japanese Published Unexamined Patent Application No. 2000-278546, namely, a color difference minimization method in which a color gamut is converted into a visually uniform color space so that a value of the color gamut before compressed and a value after the color gamut is mapped into the color gamut have a minimum value indicating a color difference in that color space.

In the above method, in case the content-expressed object CEO in the header block HB is one of "4" to "6", that is, when the content-expressed object is other than any person or scene, a color reproduction is done with the weight of chroma term in a color difference formula being increased so that the chroma will not be lower.

Note here that in mapping into the color gamut in steps S13 and S33, if the content preparing environment CPE in the header block HB is other than "3" and "4", for example, namely, if the CPE is other than any computer graphics, the color gamut is compressed and only values out of the color gamut are mapped in a minimum value into the color gamut. Otherwise, to make the most of the color gamut of a device D, the color gamut of a device S and that of the device D are analyzed to appropriately map values out of the color gamut of the device D.

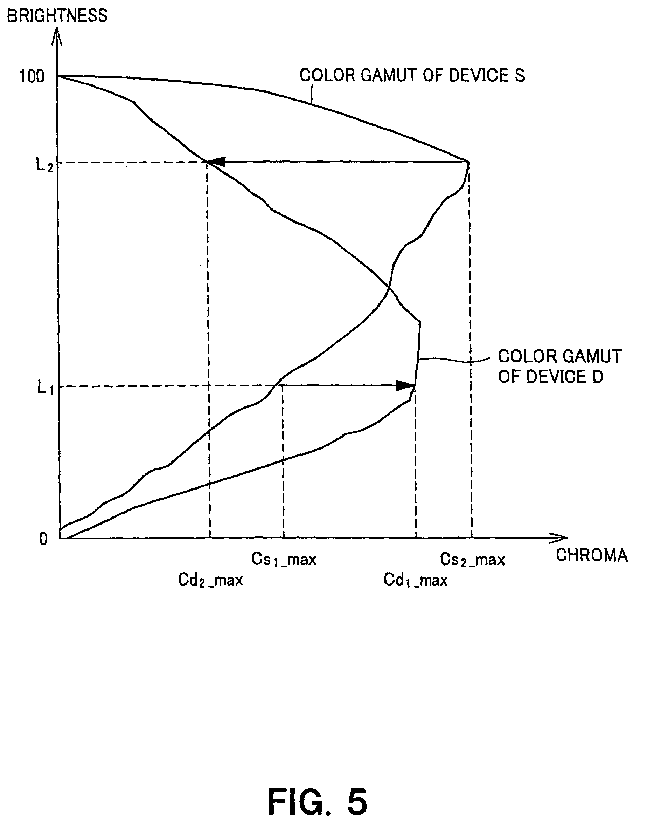

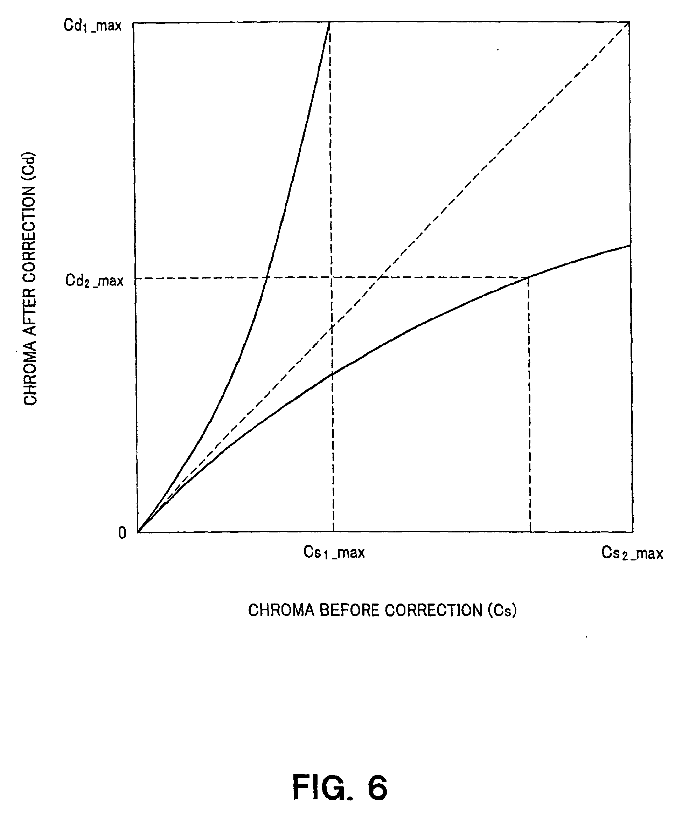

Note here that a chromatic value Cs is converted into a chromatic value Cd on an axis, on which the luminosity and hue for the chromatic value Cs are the same as those for the chromatic value Cd, in an LCH color space defined by luminosity, chroma and hue axes as shown in FIG. 5 by a conversion formula given by the following equation (1), for example, so that a chromatic value Cs_max of the color gamut edge of the device S will be mapped on a chromatic value Cd-max of the color gamut edge of the device D as shown in FIG. 6, to thereby map a high chromatic value correspondingly to the color gamut of the device D while maintaining a low chromatic value.

$$Cd = k \times (e^{Cs/k} - 1) \tag{1}$$

where k is a coefficient depending upon Cs_max and Cd_max.

Note that there are available various other techniques similar in purpose to the above one, as disclosed in the Japanese Published Unexamined Patent Applications No. 2000-350050, No. 2001-43344, etc., for example.

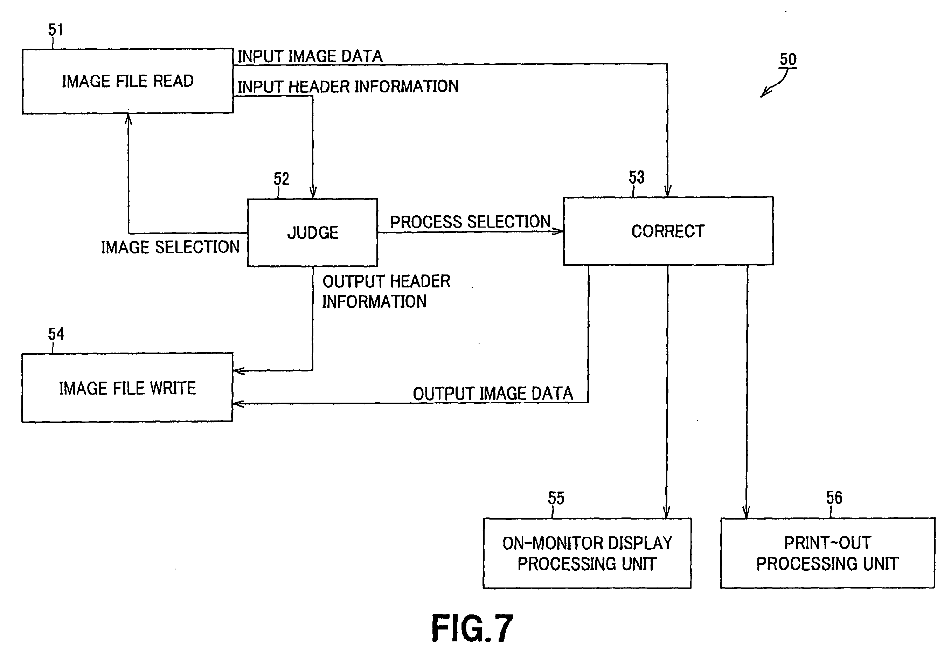

Also note here that as having been described in the foregoing, the image information processing according to the present invention are effected under the control of the application software but they can also be effected by an image processor generally indicated with a reference number 50 in the block diagram in FIG. 7 for example.

As shown, the image processor 50 includes an image file reader 51, judgment unit 52, correction unit 53, image file writer 54, on-monitor display processing unit 55, print-out processing unit 56, etc.

In the image processor 50, the image file reader 51 reads data in an image file recorded in an HDD, memory card, digital camera or the like in the format shown in FIG. 1. Following the procedure in the flowchart in FIG. 3 or 4, the judgment unit 52 selects, based on header information in a header block HB, image data in an appropriate image block and selects an appropriate correcting process. The correction unit 53 corrects the image data and holds the corrected image data provisionally in a memory (RAM). Using the format shown in FIG. 1, the image file writer 54 records or writes the corrected image data along with appropriate header information to the image file in an HDD. The image file itself may be written additionally or with a change thereto to a file from which it has been read or into a newly prepared file.

The on-monitor display processing unit 55 processes the corrected image data for display on the monitor.

The print-out processing unit 56 processes the image data for supply to the printer driver for print-out.

In the embodiment of the present invention having been described in the foregoing, data may be generated for a fixed resolution of 72 dpi for display on a personal computer's monitor for example, while image data included in the same file but adjusted differently from each other may be kept different in resolution from each other, by maintaining the maximum resolution, for example.

Also, pixel adjustment may not be done for all original image data. For example, image data for display on the monitor screen may have only the to-be-displayed pixels thereof adjusted.

Image data to be included in an image block may be recorded in a compressed form. Information incidental to the data compression may be recorded in each image block or the header block. An existing image format of such a specification may be used for the image block.

The code indicative of an adjusted state may be segmented by defining adjusted items thereof, adjusted amounts, etc.

The color and gradation adjustment for which a code indicative of an adjusted state intended may not only be done of independent pixels but in association with other pixels for sharpness correction etc.

In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope and spirit thereof as set forth and defined in the appended claims.

Industrial Applicability

As having been described in the foregoing, the present invention permits to select the most appropriate manner of correction for image data on a content-expressed object on the basis of information in a file including the image data in accordance with the color and gradation reproducing capability and intended purpose of each of various output devices via appropriate comprehension of encoded and adjusted states of the image data, improve the color reproducibility of image data encoded in the same color space, and attain a desired color reproduction of image data via making the most of the standard color space whose color gamut is expanded.

Also, the present invention permits to appropriately render image data being stored when an output device and intended purpose are known if it can be determined that the image data has not yet been adjusted to any specific device but it is recorded in an expression more approximate to a scene.

Also, the present invention permits to know, when subject image data resulted from encoding of a content might have been adjusted in some way and it is desired to use image data adjusted in another way, whether the latter image data exists and an address to which reference should be made for finding the image data, to thereby attain a coefficient and best correction of the image data by reading and making the most of the image data most approximate to the subject image data.

Also, the present invention permits to identify, when there is a plurality of image data rendered for different devices, each of the devices for which the image data have been adjusted, to thereby make an appropriate output of the image data without having to a new adjustment of all the image data just by selecting a device to which the image data is to be provided or image data most approximate to the intended purpose.

**Claims**

1. An image information transmission method comprising the steps of :

appending, in the form of a specific code to image data, information indicating how the image data encoded in the standard color space has been adjusted in color and gradation representation as information for reproducing color and gradation information on the image data; and
transmitting the image data having the information appended as the specific code thereto.

2. The method as set forth in claim 1, wherein information explaining how the image data is to be represented in color and gradation is appended as the specific code to the image data.

3. The method as set forth in claim 1, wherein parameters indicative of how the color and gradation representation of the image data has been adjusted is appended as the specific code to the image data.

4. The method as set forth in any one of claims 1 thru 3, wherein the image data encoded in the standard color space, and a data file having appended thereto a code indicative of how the color and gradation have been adjusted, have appended thereto, respectively, position information enabling reference to another data file adjusted in color and gradation differently from the same color and gradation representation.

5. The method as set forth in any one of claims 1 thru 3, wherein there is stored in one data file a plurality of image data adjusted in color and gradation differently from the same color and gradation representation and a specific code indicative of how each of the image data has been adjusted in color and gradation representation.

6. An image information transmission method, wherein when there exists a plurality of data files each having stored therein image data encoded in the standard color space and adjusted in color and gradation differently from the same color and gradation representation, a management data file is used which has stored therein position information enabling reference to an image data file corresponding to the adjusted state of each of the data files.

7. The method as set forth in claim 6, wherein information explaining how image data is to be represented in color and gradation is appended as a specific code to the management data file.

8. An image information processing apparatus that is supplied with image data having appended in the form of a specific code thereto information indicating how the image data encoded in the standard color space has been adjusted in color and gradation representation as information for reproducing color and gradation information on the image data, the apparatus comprising:

   an adjusting means for reproducing color and gradation information on the image data by adjusting the image data referring to the information appended as the specific code to the image data.

9. The apparatus as set forth in claim 8, wherein:

   there is supplied image data having appended as the specific code thereto information explaining how the image data is to be represented in color and gradation; and
   the image data is adjusted by the adjusting means on the basis of the information, appended as the specific code to the image data and explaining how the image data is to be represented in color and gradation.

10. The apparatus as set forth in claim 8, wherein:

    there is be supplied image data having appended as the specific code thereto parameters indicative of how the color and gradation representation of the image data has been adjusted; and
    the image data is adjusted on the basis of the basis of the parameters appended as the specific code to the image data and indicating how the color and gradation representation of the image data has been adjusted.

11. The apparatus as set forth in claim 10, wherein the image data is adjusted, for restoration to a before-adjustment state, by the adjusting means on the basis of the parameters indicative of how the color and gradation representation of the image data has been adjusted.

12. The apparatus as set forth in any one of claims 8 thru 10, wherein:

    there is supplied image data including the image data encoded in the standard color space, and a data file having appended thereto a code indicative of how the color and gradation have been adjusted, having appended thereto, respectively, position information enabling reference to another data file adjusted in color and gradation differently from the same color and gradation representation; and
    the image data is adjusted by the adjusting means referring to the data file on the basis of the position information appended thereto.

**13.** The apparatus as set forth in claim 12, wherein an adjustment is done by the adjusting means to reproduce an image in a color and gradation corresponding to an application on the basis of information indicative of an intended application of the image.

**14.** The apparatus as set forth in claim 12, wherein the image data is adjusted, for restoration to a before-adjustment state, by the adjusting means on the basis of the parameters indicative of how the color and gradation representation of the image data has been adjusted.

**15.** The apparatus as set forth in claim 14, wherein an adjustment is done by the adjusting means to reproduce an image in a color and gradation corresponding to an application on the basis of information indicative of an intended application of the image.

**16.** The apparatus as set forth in any one of claims 8 thru 10, wherein:

> there is supplied one data file having stored therein a plurality of image data having been adjusted in color and gradation differently from the same color and gradation representation and a code indicating how each of the image data has been adjusted; and
> the image data is identified in the data file and adjusted by the adjusting means.

**17.** The apparatus as set forth in claim 16, wherein an adjustment is done by the adjusting means to reproduce an image in a color and gradation corresponding to an application on the basis of information indicative of an application of the image.

**18.** The apparatus as set forth in claim 16, wherein the image data is adjusted, for restoration to a before-adjustment state, by the adjusting means on the basis of the parameters indicative of how the color and gradation representation of the image data has been adjusted.

**19.** The apparatus as set forth in claim 18, wherein an adjustment is done by the adjusting means to reproduce an image in a color and gradation corresponding to an application on the basis of information indicative of an application of the image.

**20.** An image information processing apparatus in which when there exists a plurality of data files each having stored therein image data encoded in the standard color space and adjusted in color and gradation differently from the same color and gradation representation, there is supplied a management data file having stored therein position information enabling reference to an image data file corresponding to the adjusted state of each of the data files, the apparatus comprising:

> an adjusting means for reproducing the color and gradation representation of the image data by adjusting the image data referring to the image data file on the basis of the position information stored in the management data file.

**21.** The apparatus as set forth in claim 20, wherein the image data is adjusted, for restoration to a before-adjustment state, by the adjusting means on the basis of the parameters indicative of how the color and gradation representation of the image data has been adjusted.

**22.** The apparatus as set forth in claim 20, the image data is adjusted by the adjusting on the basis of information appended as the specific code to the management data file and explaining how the image data is to be adjusted in color and gradation.

**23.** The apparatus as set forth in any one of claims 20 to 22, wherein an adjustment is done by the adjusting means to reproduce an image in a color and gradation corresponding to an application on the basis of information indicative of an application of the image.

FIG.1

FIG.2

EP 1 445 942 A1

S1

DETECT IMAGE BLOCK
WHOSE IMAGE STATE IS "4-X"
FROM HEADER BLOCK

No

Yes

S4

DETECT IMAGE BLOCK
WHOSE IMAGE STATE IS "3-0" OR
"2-0" AT HEADER BLOCK

No → (A)

Yes

S2

READ IMAGE DATA
AT OFFSET ADDRESS
OF IMAGE BLOCK

S5

READ IMAGE DATA
AT OFFSET ADDRESS
OF IMAGE BLOCK

S3

COLOR SPACE "3"?

No

Yes

(B)

S10

COMPRESS COLOR
GAMUT TO VALUE
OUT OF COLOR
GAMUT IN COLOR
SPACE "3"

(C)

S15

CONVERT COLOR
SPACE TO "3",
AND CLIP VALUE OUT
OF COLOR GAMUT IN
COLOR SPACE "3",
AT TIME OF ENCODING

S16

MAKE INSTRUCTION
FOR DISPLAY OF IMAGE
ON MONITOR

FIG.3

16

Ⓐ

DETECT IMAGE BLOCK
WHOSE IMAGE STATE IS "1-0"
FROM HEADER BLOCK — S6

No →

↓ Yes

READ IMAGE DATA
AT OFFSET ADDRESS
OF IMAGE BLOCK — S7

↓

GENERATE HISTOGRAM
TO IDENTIFY
WHITE POINT — S8

↓

MAKE WHITE BALANCING
IN LINEAR SPACE,
AND CONVERT RESULT OF
WHITE BALANCING
INTO COLOR SPACE "7" — S9

DETECT IMAGE BLOCK
WHOSE IMAGE STATE IS "5-0" OR
HIGHER FROM
HEADER BLOCK — S11

No →

↓ Yes

READ IMAGE DATA
AT OFFSET ADDRESS
OF IMAGE BLOCK — S12

↓

MAP, INTO COLOR GAMUT
IN COLOR SPACE "3",
ALL VALUES IN COLOR
GAMUT OF DEVICE SPECIFIED
BY IMAGE STATE — S13

Ⓑ

Ⓒ

MAKE INSTRUCTION
FOR DISPLAY OF
ERROR MESSAGE — S14

# CONTINUATION OF FIG. 3

S21

DETECT IMAGE BLOCK
WHOSE IMAGE STATE IS "6-X"
FROM HEADER BLOCK

No → S24

DETECT IMAGE BLOCK
WHOSE IMAGE STATE IS "3-0" OR
"2-0" IN HEADER BLOCK

No → (D)

Yes

S22

READ IMAGE DATA
AT OFFSET ADDRESS
OF IMAGE BLOCK

Yes

S25

READ IMAGE DATA
AT OFFSET ADDRESS
OF IMAGE BLOCK

S23

COLOR SPACE
SAME AS CODE FOR
IMAGE DATA INPUT
TO PRINTER?

No

(E)

S30

COMPRESS COLOR
GAMUT TO VALUE
OUT OF COLOR
GAMUT OF PRINTER

Yes

(F)

S35

CONVERT COLOR
SPACE INTO PRINTER RGB,
AND CLIP VALUE OUT
OF COLOR GAMUT,
IF ANY, AT TIME OF ENCODING

S36

MAKE INSTRUCTION
FOR IMAGE DISPLAY
ON MONITOR

# FIG.4

18

(D)

S26

DETECT IMAGE BLOCK
WHOSE IMAGE STATE IS "1-0"
IN HEADER BLOCK

No ──→

S31

DETECT IMAGE BLOCK
WHOSE IMAGE STATE IS "4-0" OR
HIGHER IN
HEADER BLOCK

No ──→

Yes ↓

S27

READ IMAGE DATA
AT OFFSET ADDRESS
OF IMAGE BLOCK

S28

GENERATE HISTOGRAM
TO IDENTIFY
WHITE POINT

S29

MAKE WHITE BALANCING
IN LINEAR SPACE,
AND CONVERT RESULT OF
WHITE BALANCING
INTO COLOR SPACE "7"

Yes ↓

S32

READ IMAGE DATA
AT OFFSET ADDRESS
OF IMAGE BLOCK

S33

MAP ALL VALUES
IN COLOR GAMUT
OF DEVICE SPECIFIED BY
IMAGE STATE INTO COLOR
GAMUT IN COLOR SPACE "3"

(E)

(F)

S34

MAKE INSTRUCTION
OF
ERROR MESSAGE

# CONTINUATION OF FIG. 4

19

FIG. 5

FIG. 6

**FIG.7**

EP 1 445 942 A1

**INTERNATIONAL SEARCH REPORT**

| International application No. |
|---|
| PCT/JP02/11736 |

| A. CLASSIFICATION OF SUBJECT MATTER |
|---|
| Int.Cl$^7$ H04N1/60, H04N1/46, G06T1/00, G06T5/00 |

According to International Patent Classification (IPC) or to both national classification and IPC

| B. FIELDS SEARCHED |
|---|
| Minimum documentation searched (classification system followed by classification symbols) |
| Int.Cl$^7$ H04N1/40-1/409, H04N1/46-1/64 |

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 9-322009 A (Fuji Xerox Co., Ltd.), 12 December, 1997 (12.12.97), Full text; all drawings (Family: none) | 1-23 |
| X | JP 2001-157069 A (Minolta Co., Ltd.), 08 June, 2001 (08.06.01), Full text; all drawings & US 2001/0038468 A1 | 1-23 |
| X | JP 10-224643 A (Canon Inc.), 21 August, 1998 (21.08.98), Full text; all drawings (Family: none) | 1-23 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 February, 2003 (10.02.03) | 25 February, 2003 (25.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

23

## INTERNATIONAL SEARCH REPORT

| | International application No. |
|---|---|
| | PCT/JP02/11736 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-309296 A  (Fuji Photo Film Co., Ltd.),<br>02 November, 2001 (02.11.01),<br>Full text; all drawings<br>& US 2001/0035909 A1 | 1-23 |
| X | JP 4-188954 A  (Canon Inc.),<br>07 July, 1992 (07.07.92),<br>Full text; all drawings<br>& US 5251020 A        & US 5434684 A<br>& EP 0766454 A3      & EP 0487329 A3 | 1-23 |

Form PCT/ISA/210 (continuation of second sheet) (July 1998)